# EUROPÄISCHE PATENTANMELDUNG

(11) **EP 0 609 696 A1**
(43) Veröffentlichungstag der Anmeldung: **10.08.1994**
(21) Anmeldenummer: 94100691.8
(22) Anmeldetag: 19.01.1994
(51) Int. Cl.: B65G 5/00, E21B 43/12

(54) **Verfahren zur Soleentleerung unter gleichzeitiger pneumatischer Stützung von Salzkavernen**

(30) Priorität: 30.01.1993 DE 4302643
(71) Anmelder: SOLVAY SALZ GmbH, D-42697 Solingen (DE)
(72) Erfinder: Reimer, Günter, Dr., D-40591 Düsseldorf (DE)
(74) Vertreter: Lauer, Dieter, Dr.

(57) **Zusammenfassung**

Die vorliegende Erfindung betrifft ein Verfahren sowie eine Vorrichtung zur Soleentleerung (15,17) unter gleichzeitiger pneumatischer Stützung (1,14,16) von Salzkavernen (9). Hierbei wird die Soleentleerung (15,17) mit Hilfe mindestens einer Bohrlochtauchpumpe (10) unter gleichzeitiger Beaufschlagung der Kaverne (9) unter Druck mit Luft oder einem anderen inerten Gas durchgeführt (1,16).

## Beschreibung

Die vorliegende Erfindung betrifft ein Verfahren zur Soleentleerung unter gleichzeitiger pneumatischer Stützung von Salzkavernen, insbesondere von Salzkavernen für die Untertagedeponie von festen und/oder flüssigen Abfallstoffen.

Gesolte Salzkavernen finden bereits seit längerer Zeit für die Lagerung von Mineralöl oder Mineralölprodukten sowie für die Speicherung von Gasen bzw. Flüssiggasen Verwendung. Diese Kavernen weisen eine Tiefe von 600 bis 2000 m sowie ein Füllvolumen je Einzelspeicher von 0,3 bis 0,9 Mio. m³ auf. Nach beendeter Solung befinden sich die Salzkavernen im solegefüllten Zustande. Im Kavernentiefsten sind die während des Solprozesses nicht aus der Kaverne ausgetragenen unlöslichen Bestandteile aus dem Steinsalz (Anhydrit) und die nicht in Lösung gegangenen sedimentierten Salzpartikel (Kavernensumpf).

Beim Füllen mit Mineralöl oder Mineralölprodukten preßt eine Hochdruckpumpe das flüssige Speichermedium in die mit Sole gefüllte Salzkaverne. Das eingepreßte Mineralöl verdrängt aufgrund des hohen Druckes die Sole. Bei der Auslagerung arbeitet man in umgekehrter Förderungsrichtung. Ein derartiges Verfahren findet sich in DE-C-23 38 140 beschrieben. Hierbei wird zum Befüllen der Kaverne das Mineralölprodukt über den Ringraum zwischen der Bohrlochverrohrung und dem Befüllrohr unter Druck in die Kaverne eingepumpt, bis sich der Trennspiegel zwischen Mineralölprodukt und Sole tief genug gesenkt hat. Zum Auslagern des Mineralölproduktes wird die zu seiner Verdrängung benötigte Sole oberhalb des Trennspiegels zwischen Mineralöl und Sole in das Mineralölprodukt eingepreßt. Die mit einer vorhergehenden Entleerung einer Kaverne verbundenden Probleme treten hier nicht auf.

Bei der Speicherung von Erdgas und anderen Gasen verdrängt das unter hohem Druck eingepreßte Gas die Sole aus der Kaverne bis zur fast vollständigen Entleerung. Aus Gründen der Standfestigkeit der Kaverne ist ein bestimmter Gasinhalt zur Aufrechterhaltung eines Kavernenmindestdrucks notwendig (Kissengas). Das gespeicherte Gas wird der Kaverne entnommen und in ein mit niedrigerem Betriebsdruck arbeitendes Verbrauchernetz eingespeist, siehe DE-C-3637370.

Anders als bei der Einlagerung von Mineralöl und Gas müssen bei der Einlagerung von flüssigen und festen Abfallstoffen in Salzkavernen letztere leergepumpt werden, weil bei der Verdrängung der Sole durch die Abfallstoffe die Sole verunreinigt wird. Hierbei ist zu berücksichtigen, daß bei den üblichen Soleauslagerungsverfahren die Salzkaverne auf Atmosphäredruck entlastet wird und sich in einem aus gebirgsmechanischer Sicht sehr ungünstigen Lastfall befindet, da infolge Fehlens des Innendrucks mit der Zeit die Gefahr des Kollabierens der Kavernenwandung sehr groß wird. Dies ist in besonderem Maße in sehr großvolumigen Salzkavernen der Fall, insbesondere aber, wenn diese nebeneinander in einem Kavernenfeld zu mehreren Einheiten angeordnet sind, wobei die Sicherheitspfeiler zwischen den einzelnen Kavernen stärker dimensioniert sein müssen. Um dieser Gefahr zu begegnen, sind daher trotz Vorhandenseins starker Sicherheitspfeiler besondere Maßnahmen bei der Soleentleerung und Befüllung von Salzkavernen erforderlich.

Aus der EP-B-0026301 ist ein Verfahren zum Beseitigen oder Zwischenlagern von Abfällen in untertägigen Deponien bekannt. Hierbei wird ein unter 20 Gew.% Transportflüssigkeit enthaltendes Abfallprodukt mittels einer Verdrängungspumpe in den unterirdischen Hohlraum gefördert. Eine vorangehende Soleentleerung einer Salzkaverne als Hohlraum wird hier nicht erwähnt.

Aus DE-A-4126946 ist ein Verfahren zur Einbringung von staub- und schlammförmigen Sonderabfällen in untertägige Kavernen bekannt, bei dem durch ein pneumatisches, geschlossenes Fördersystem die Förderluft ständig im Umlauf ist und die Abfälle in die untertägige Kaverne fördert. Über Art und Weise einer erforderlichen vorhergehenden Soleentleerung der mit den Abfällen zu befüllenden Salzkaverne finden sich keine Angaben.

Aus EP-B-0320393 ist ein Verfahren zur geologischen Einschließung giftiger Industrieabfälle bekannt, wobei in einem mit Sole gefüllten Hohlraum die Abfälle im Innern einer pumpbaren Mischung eingefüllt werden, deren Dichte größer als die der Sole ist und sich nach dem Einfüllen verfestigt. Zusätzlich wird eine bestimmte Menge einer Pufferflüssigkeit eingeführt, die weder mit der Sole noch mit der Mischung mischbar ist, deren Dichte zwischen der der Sole und der Mischung liegt und die eine oder mehrere halogenierte Lösungsmittel aufweist. Ein derartiges Verfahren vermeidet zwar die aus gebirgsmechanischen Gründen nachteilige völlige Entleerung der Salzkaverne, ist jedoch aufwendig.

Bei einer Soleauslagerung vor der Befüllung einer Kaverne mit Abfallstoffen durch Abpumpen der Sole mittels einer Tauchpumpe (vgl. Aufsatz: "Disposal of medium and low-level radioactive waste in leached caverns", Sixth International Symposium on Salt, 1983, Vol. II, Seite 217 und 231) wird jedoch die Kaverne auf Atmosphärendruck entlastet. Die Kaverne muß bei diesem aus gebirgsmechanischer Sicht äußerst ungünstigen Lastfall über den Soleentleerungs- und Abfalleinlagerungszeitraum standsicher sein. Dieses Verfahren ist daher ausschließlich bei kleinen Kavernen ohne Sicherheitsrisiko durchführbar, nicht jedoch bei großen Kavernen mit großer Teufe, die allein zur Deponie großer Abfallmengen von Interesse sind.

Versucht man, zwecks Soleentleerung unter gleichzeitiger pneumatischer Stützung der Salzkavernen die Sole mittels Druckluft pneumatisch zu verdrängen (vgl. Aufsatz: "Disposal of medium and low-level radioactive waste in leached caverns", Sixth International Symposium on Salt, 1983, Vol. II, Seite 217 und 231), so müssen sehr hohe Drücke bis angewendet werden, um die Sole aus den großen Kavernen mit großer Teufe verdrängen zu können. Derart hohe Drücke - beispielsweise bei Kavernen von 1000 m Tiefe etwa 140 bar, siehe Seite 231, rechte Spalte unterhalb des vorerwähnten Aufsatzes - sind jedoch unwirtschaftlich, da zu deren Erzeugung umfangreiche Verdichteranlagen installiert werden müssen, die nach beendeter Soleentleerung nicht mehr Verwendung finden können. Andererseits erschweren derart hohe Drucke in den leergepumpten Kavernen die Befüllung der Kavernen mit den Abfallstoffen.

Die Aufgabe der vorliegenden Erfindung bestand daher darin, ein Verfahren zur Soleentleerung unter gleichzeitiger pneumatischer Stützung von Salzkavernen, insbesondere von Salzkavernen für die Untertagedeponie von festen und/oder flüssigen Abfallstoffen zur Verfügung zu stellen, das in wirtschaftlicher Weise ohne Anwendung sehr hoher Drucke sowohl eine weitgehende Soleentleerung als auch eine ungehinderte Befüllung der Salzkavernen mit Abfallstoffen unter gleichzeitiger Beibehaltung des Kavernenstützdruckes ermöglicht.

Erfindungsgemäß wurde festgestellt, daß diese Aufgabe bei einem Verfahren der eingangs genannten Art gelöst wird, indem die Soleentleerung mit Hilfe mindestens einer Bohrlochtauchpumpe unter gleichzeitiger Beaufschlagung der Salzkaverne unter Druck mit Luft oder einem anderen inerten Gas durchgeführt wird. Auf diese Weise ist es erstmals möglich, eine wirtschaftliche Soleentleerung unter gleichzeitiger Aufrechterhaltung eines sicheren Stützdrucks sowie eine unbehinderte Befüllung der Salzkaverne mit festen und/oder flüssigen Abfallstoffen bei dem angewendeten Kavernenstützdrucks zu erreichen.

Nach einer vorzugsweisen Ausführungsform der Erfindung erfolgt die Soleentleerung unter Beibehaltung des erforderlichen Kavernenstützdruckes. Die Höhe des erforderlichen Kavernenstützdrucks hängt von der Tiefe und Größe der Kaverne, von dem Abstand einer Kaverne von der bzw. den benachbarten Kavernen sowie von der Offenhaltungszeit der Kavernen ab.

Gemäß einer Ausführungsform der Erfindung werden der erforderliche Einlaßdruck bzw. Vordruck der Bohrlochtauchpumpe und der Kavernenstützdruck durch eine übertägig angeordnete Verdichteranlage aufrechterhalten.

Die Bohrlochtauchpumpe (Pumpe und E-Motor) ist in einem Mantelrohr angeordnet und mit dem unteren Ende des Soleauslagerungsstranges lösbar befestigt. Die elektrische Energie wird dem Pumpenantrieb über ein entsprechendes Kabel von übertage aus zugeführt. Der Einlaßdruck der Bohrlochtauchpumpe und der Kavernenstützdruck werden bis zum Abschluß der Soleentleerung durch eine übertägig angeordnete Verdichterstation aufrechterhalten. Die Soleentleerung erfolgt nach einer Ausführungsform der Erfindung solange, bis der Solespiegel das untere Ende des Mantelrohres der Bohrlochtauchpumpe erreicht hat. Anschließend werden der Soleauslagerungsstrang und die Bohrlochtauchpumpe unter Verwendung einer speziellen Druckschleuse unter Beibehaltung des Kavernenstützdrucks ausgebaut.

Als Bohrlochtauchpumpe wird vorteilhaft eine an sich bekannte mehrstufige Tauchkreiselpumpe verwendet. Mehrere derartige Pumpen können von zwischen ihnen angeordneten E-Motoren angetrieben und in dem bereits erwähnten Mantelrohr installiert werden.

Vor Beginn einer Abfalleinlagerung wird die Kaverne unter Berücksichtigung der Erfordernisse des späteren Abfallbeseitigungsbetriebs umgerüstet. Nach dem erfindungsgemäßen Ausbau des Soleauslagerungsstrangs und der Bohrlochtauchpumpe unter Beibehaltung des Kavernenstützdrucks wird vor Beginn der Abfalleinlagerung eine Befüllungsrohrtour eingebaut. Zum Schutz der Kavernenendverrohrung gegen Korrosion wird wie bei Gasspeicherkavernen eine zusätzliche Rohrtour im Rohrschuhbereich des letzten zementierten Casing in einem Packer abgesetzt. Der Ringraum zwischen Schutzrohrtour und letztem zementierten Casing wird in bekannter Weise mit gesättigter NaCl-Sole gefüllt, der vorteilhaft ein Korrosionsinhibitor zugegeben wird.

Die erfindungsgemäße Vorrichtung besteht aus einer übertägigen Verdichteranlage und mindestens einer Bohrlochtauchpumpe, die in einem Mantelrohr installiert und mit dem unteren Ende des Soleaustragungstranges lösbar verbunden ist. Vorteilhaft besteht die Bohrlochtauchpumpe aus einer mehrstufigen Tauchkreiselpumpe.

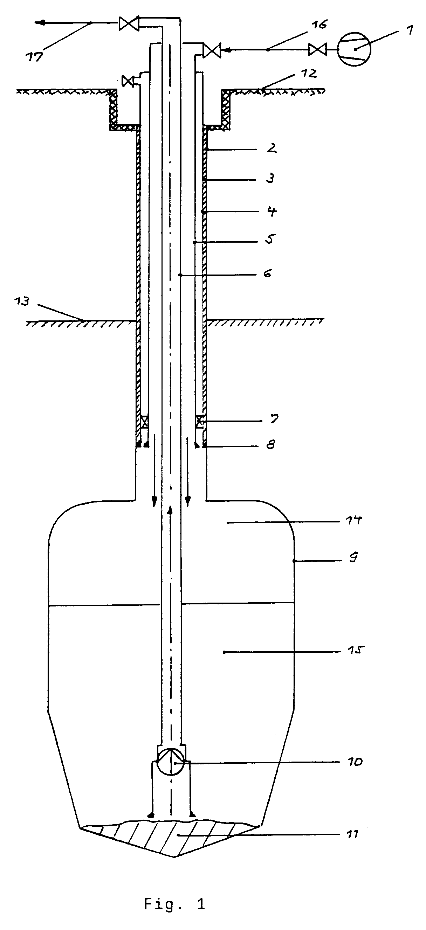

In der beigefügten Zeichnung ist eine beispielhafte Ausführungsform der Erfindung dargestellt. Hierin bedeuten:
- 1: Verdichteranlage
- 2: Bohrloch
- 3: Zementation
- 4: Endverrohrung (letztes zementiertes Casing)
- 5: Schutzrohrtour
- 6: Soleauslagerungsstrang
- 7: Packer
- 8: Rohrschuh Endverrohrung
- 9: Salzkaverne
- 10: Tauchpumpe
- 11: Kavernensumpf
- 12: Tagesoberfläche
- 13: Steinsalzoberkante
- 14: Druckluft
- 15: Sole
- 16: Druckluftzuführung
- 17: Soleabführung

## Patentansprüche

1. Verfahren zur Soleentleerung unter gleichzeitiger pneumatischer Stützung von Salzkavernen, dadurch gekennzeichnet, daß die Soleentleerung mit Hilfe mindestens einer Bohrlochtauchpumpe unter gleichzeitiger Beaufschlagung der Kaverne unter Druck mit Luft oder einem anderen inerten Gas durchgeführt wird.

2. Verfahren nach Anspruch 1, dadurch gekennzeichnet, daß die Soleentleerung unter Beibehaltung des Kavernenstützdrucks erfolgt.

3. Verfahren nach Anspruch 2, dadurch gekennzeichnet, daß der erforderliche Einlaßdruck der Bohrlochtauchpumpe und der Kavernenstützdruck durch eine übertägig angeordnete Verdichteranlage aufrecht erhalten werden.

4. Verfahren nach einem oder mehreren der Ansprüche 1 bis 3, dadurch gekennzeichnet, daß die Soleentleerung solange erfolgt, bis der Solespiegel das untere Ende des Mantelrohres der Bohrlochtauchpumpe erreicht hat.

5. Verfahren nach einem oder mehreren der Ansprüche 1 bis 4, dadurch gekennzeichnet, daß nach Beendigung der Soleentleerung der Soleauslagerungsstrang und die Bohrlochtauchpumpe unter Beibehaltung des Kavernenstützdrucks ausgebaut werden.

6. Verfahren nach Anspruch 5, dadurch gekennzeichnet, daß nach dem Ausbau des Soleauslagerungsstrangs und der Bohrlochtauchpumpe vor Beginn einer Einlagerung von festen und/oder flüssigen Abfallstoffen in die Salzkaverne eine Befüllungsrohrtour eingebaut wird.

7. Vorrichtung der Durchführung des Verfahrens nach Ansprüchen 1 bis 5, dadurch gekennzeichnet, daß sie aus einer übertägigen Verdichteranlage und mindestens einer Bohrlochtauchpumpe, die in einem Rohrmantel installiert und mit dem unteren Ende des Soleaustragungsstranges lösbar befestigt ist, besteht.

8. Vorrichtung nach Anspruch 7, dadurch gekennzeichnet, daß die Bohrlochtauchpumpe aus einer mehrstufigen Tauchkreiselpumpe besteht.
